# EUROPEAN PATENT SPECIFICATION

(11) **EP 0 496 767 B1**
(45) Date of publication and mention of the grant of the patent: **01.02.1995**
(21) Application number: 90915329.8
(22) Date of filing: 16.10.1990
(51) Int. Cl.: A23L 1/217, A23L 1/164, A21C 11/04

(54) **IMPROVEMENTS IN AND RELATING TO SNACK PRODUCTS**
IMBISSPRODUKTE
AMELIORATIONS APPORTEES A DES PRODUITS ALIMENTAIRES DE TYPE "SNACK"

(30) Priority: 18.10.1989 GB 8923469
(43) Date of publication of application: 05.08.1992
(60) Divisional application: 93119043.3
(73) Proprietor: UNITED BISCUITS (UK) LIMITED, West Drayton, Middlesex UB7 6PR (GB)
(72) Inventor: CLARK, David, Nigel, Quorn Leicestershire LE12 8UX (GB); DUNKERTON, Paul, David, Oakthorpe S. Derbyshire DE12 7QT (GB)
(74) Representative: Humphreys, Ceris Anne
(86) International application number: GB9001600
(87) International publication number: WO9105483

(56) References cited:
- EP-A- 387 606
- BE-A- 675 115
- FR-A- 2 264 492
- FR-A- 2 270 803
- FR-A- 2 321 850
- US-A- 1 647 756
- Patant abstract of Japan, vol. 13, n 79 (C-571) (3427) 22 February 1989

## Description

The invention relates to a process for the manufacture of a snack food product, and especially a snack food product of which the appearance resembles that of a "crinkle-cut" or "corrugated" potato crisp. The invention also relates to a snack food product produced by the process.

Crinkle-cut or corrugated potato crisps are essentially made by frying thin potato slices that have been so cut as to give them a crinkled configuration. Because potatoes are a seasonal crop, but the demand for potato crisps persists throughout the year, the manufacture of potato crisps entails storing potatoes, which is expensive. Furthermore, it is difficult to maintain the processing efficiency and the flavour, colour and texture of the crisps at a consistent level throughout the year.

GB A 1 552 200 describes a process in which a puffed extrudate may be compressed between patterned rollers. US A 3 468 675 describes a process in which a strand of material may be corrugated before being folded and pressed, the corrugations being introduced to improve the ability of the final product to absorb liquid. FR A 2 270 803 describes a method of producing rippled chips in which method, a rippled configuration is impressed onto only one surface of a dough sheet by an embossed roller.

EP A 0 387 606 describes a process for producing rippled snack chips, the process including the step of passing a dough through a pair of corrugated sheeting rolls. That document forms part of the state of the art only under Article 54(3) EPC.

The problems associated with the use of potatoes could be overcome if corrugated snack food products could be made, not from actual potato slices, but from a sheet of material that contained a substantial proportion of a dry potato product, for example, potato flour, potato granules or potato flakes, because dry potato products keep well over long periods without the need for chemical treatment or specially careful control of the storage conditions and, moreover, the properties of any given dry product are relatively consistent as compared with the properties of raw potatoes.

It will be appreciated that, if a technique could be found for making, from a flat sheet of material containing a substantial proportion of potato flour or other dry potato product, a fried product having the crinkled configuration of a corrugated potato crisp, the technique could probably be applied to the manufacture of other corrugated snack food products where the flat sheet of material contains, instead of a substantial proportion of potato flour or other dry potato product, a substantial porportion of a different starchy food product. Wheat, maize, tapioca and rice solids would be examples of such materials. Further, the crinkled configuration of the final, fried product might enhance the texture (as perceived by the consumer) and the attractiveness of the product as compared with a product that was the same except that, instead of having a crinkled configuration, it was flat. Accordingly, the usefulness of the technique would not be confined to products made from ingredients of which a potato product was an important ingredient.

The invention provides a process for the manufacture of a snack food product which comprises forming a flat sheet of dough, passing the sheet of dough through at least one pair of reducing rolls arranged to decrease the piece weight of the sheet of dough (the term "piece weight" being defined hereinafter) and feeding the sheet of dough, after it has been acted on by the at least one pair of reducing rolls, to a pair of embossed rollers arranged both to decrease the piece weight (as hereinafter defined) of the sheet of dough to a value not exceeding two thirds of that obtaining immediately before the sheet of dough is acted on by the embossed rollers and to impart a three-dimensional patterned configuration to the sheet of dough, the piece weight (as hereinafter defined) of the patterned sheet of dough being not less than 2.5g, cutting out individual portions from the patterned sheet and frying the individual portions to form the snack food product.

The term "piece weight" is used throughout the Specification, including the claims, in relation to a sheet of dough, to mean the weight of a piece of dough removed from the sheet by impressing on the sheet a circular cutter having an internal diameter of 75 mm, the cutter being so applied to the sheet that it does not extend beyond an edge of the sheet.

It will be appreciated that the piece weight provides a measure of the weight per unit area of the sheet and that, if the density of the dough remains constant, the ratio of two piece weights measured at two different parts of the sheet is equal to the ratio of the thicknesses of the two different parts of the sheet.

It has been found that, provided that the reduction in the piece weight that is effected by the embossed rollers is sufficient to reduce it to not more than two thirds of the value obtaining before the sheet is engaged by the embossed rollers (so that the ratio of the piece weight of the sheet before it is acted on by the embossed rollers to the piece weight of the patterned sheet that emerges from between the embossed rollers, is at least 1.5 to 1), the three-dimensional patterned configuration of the sheet is not removed by the frying process, and the final product has a three-dimensional patterned configuration.

It will usually be found convenient to form the flat sheet of dough, at least in part, by a three-roll sheet former or "sheeter". Such a sheeter may be used to produce a flat sheet of dough that is too thick (or has too great a piece weight) to be fed to the embossed rollers, there being interposed between the sheeter and the embossed rollers one or more pairs of reducing rolls which, by reducing the piece weight and thickness of the sheet, complete the formation of the flat sheet that is fed to the embossed rollers.

Advantageously, the embossed rollers are corrugated rollers. Preferably, the corrugated rollers are corrugated in an axial direction, that is to say, the individual corrugations preferably extend circumferentially. Then, any cross-section of each of the corrugated rollers that is taken perpendicular to the axis of the roller is circular in outline, while any axial cross-section of each of the corrugated rollers is bounded (except at the ends) by a wavy or undulating line, the precise form of which indicates the precise form of the corrugations.

There are two reasons why it is preferred that the corrugated rollers be corrugated in an axial direction. The first reason is that the individual corrugations formed in the sheet of dough then extend in the direction of advance of the sheet, with the result that the tension in the sheet that will usually be necessary, in an automated process, to advance it towards the fryer does not tend to remove the corrugations from the sheet, as it would if the individual corrugations in the sheet were to extend in a direction perpendicular to the direction of advance of the sheet. The second reason is that, as is known, it is important in the manufacture of snack products from dough that the correct amount of mechanical work be done on the dough and, although the corrugated rollers can, in accordance with the invention, be corrugated circumferentially (that is to say, the individual corrugations extend axially), the amount of work done on the dough by the corrugated rollers will then depend critically on their relative angular phases with a consequent risk that too much work will be done on the dough.

Advantageously, the rollers are corrugated by virtue of their having circumferentially extending ridges and/or grooves. Preferably, the configuration of the ridges and/or grooves is such that, seen in axial section, the curved surface of each roller has a toothed profile. The toothed profile is generally preferred to a profile in which the peaks and troughs are rounded, for example, a sinusoidal profile, because it tends to impart more pronounced corrugations to the sheet of dough. A profile with rounded peaks and troughs may prove suitable, and even advantageous, when the ratio of the piece weight of the sheet of dough before it is acted upon by the corrugated roller to the piece weight of the corrugated sheet is large. The significance of that ratio is discussed in more detail hereinafter.

Advantageously, the curved surfaces of the two corrugated rollers have, when seen in axial section, the same configuration. The teeth that form the said toothed profile may each be symmetrical about a plane that extends perpendicular to the axis of the roller and passes through the apex of the tooth. Advantageously, the two corrugated rollers are so located relative to one another in an axial direction that the apices of the teeth (save possibly for one end tooth) that form the said profile of one corrugated roller lie in planes that are perpendicular to the axes of the two corrugated rollers and that are midway between planes parallel to those planes and passing through the apices of the teeth that form the said profile of the other corrugated roller. In that way, symmetrical corrugations are formed in the sheet of dough.

If it be desired to form asymmetrical corrugations in the sheet of dough, that may be achieved by arranging that the two corrugated rollers are so located relative to one another in an axial direction that the apices of the teeth (save possibly for one end tooth) that form the said profile of one corrugated roller lie in planes that are perpendicular to the axes of the two corrugated rollers and that are between, but not mid way between, planes parallel to those planes and passing through the apices of the teeth that form the said profile of the other corrugated roller. An alternative approach is to use corrugated rollers which are such that the teeth that form the said profile are each asymmetrical about a plane that extends perpendicular to the axis of the roller and passes through the apex of the tooth.

Advantageously, the ratio of the said piece weight of the flat sheet of dough immediately before the sheet is acted on by the patterned rollers to the said piece weight of the patterned sheet of dough is at least 2.5 to 1. Preferably, the said ratio is at least 4 to 1. In many cases it will also be found advantageous to arrange that the said ratio does not exceed 6 to 1.

It will be understood that decreasing the thickness of the sheet of dough (or decreasing the piece weight of the sheet) involves doing mechanical work on the dough, with a larger value of the said ratio corresponding (for dough of a given consistency) to a larger amount of mechanical work done on unit mass of the dough. It is important that the amount of mechanical work done by the embossed rollers be sufficient to ensure that the three-dimensional configuration imparted to the sheet of dough does not disappear entirely during the frying step.

It will also be understood that, as indicated hereinbefore, it is important that overall the correct amount of mechanical work be done on the dough (strictly, on unit mass of the dough), the actual amount of mechanical work required depending on the composition of the dough. Further, the amount of mechanical work done in decreasing the piece weight of the sheet of dough by a given factor, say, 2.5, will depend on the consistency of the dough, the amount of work done being less if the dough has more "wetness" and is softer, and greater if the dough is less "wet" and is firmer.

From the explanations given hereinbefore, it will be appreciated that, when determining the ratio of the piece weight of the flat sheet of dough before it is acted upon by the embossed rollers to the piece weight of the patterned sheet, account must be taken of all previous stages of the process, including the composition of the dough.

Typically, the various solid constituents of the dough will be mixed in a mixer, into which the water will be introduced. The formation of a dough that has a high wetness and is softer as against one that is relatively dry and firmer depends, of course, on the amount of water added, but it also depends on the nature of the solid constituents, for some ingredients (especially certain modified starches) have a high capacity to absorb water so that the introduction of a given quantity of water gives a drier dough, or one having less wetness, if the dough contains a substantial proportion of such ingredients. It will be understood by those in the art that the terms "wet and "dry" refer to the feel of the dough and not to its actual water content.

Some mechanical work is done when the solid constituents are mixed and the water is mixed with them, the actual amount of work depending both on the type of mixer used and on the way in which it is operated. Mechanical work is also done by the sheeter and by the reducing rolls.

Essentially, the aim is to feed to the embossed rollers a flat sheet of dough which has had such an amount of mechanical work done on it and, which has such a piece weight, that the embossed rollers can be arranged to do an amount of mechanical work that both serves to bring the total amount of work done on the dough up to an acceptable level and to do the required amount of work on the dough to ensure that the three-dimensional configuration of the sheet of dough is not removed to an unacceptable extent during frying, and that the embossed rollers can be arranged to bring the piece weight of the patterned sheet within an acceptable range.

Advantageously, the piece weight of the patterned sheet of dough is at least 3.5g. Preferably, it does not exceed 6g. If the patterned sheet of dough has too low a piece weight, it will be difficult to remove the sheet from the rollers and the fried product will be too fragile whereas, if the piece weight is too high, the fried product may lose some of its attractiveness and also an unduly long-frying time may be required to remove the water from the dough.

Advantageously, the dough has been obtained by mixing at least one starchy food product, water and one or more materials selected from the group comprising starches, modified starches, emulsifying agents, flavourings, edible oils. The dough may be formed by a method that includes incorporating water with a dry particulate mixture of materials. The invention is especially valuable when the starchy food product, or at least one of the starchy food products, is a potato product. Preferably, the potato food product, or at least one of the potato products, is potato flour, potato flakes or potato granules.

The dry particulate mixture from which the dough is formed advantageously includes, in addition to a starchy food product, a starch. When the starchy food product is a potato food product, the starch is preferably a potato starch.

A preferred dough includes potato flakes, potato starch and water. The relative proportions of the potato flakes and potato starch are unimportant, provided that, with a suitable amount of water, a mixture of a consistency suitable for forming a sheet of dough and reducing the sheet using reducing rollers can be formed. A modified potato starch is preferably also included to assist in binding the ingredients.

Advantageously, one of the materials used in the formation of the dough is an emulsifying agent, preferably glycerol monostearate.

Examples of other ingredients that may be included in a dough are rice starch (which may improve the texture of the dough) and flavourings (for example, salt).

Advantageously, the formation of the dough includes the incorporation with the said dry particulate mixture of an edible oil, for example, a blended vegetable oil or corn oil. The oil serves to render the dough less sticky, that is to say, to reduce the tendency of the dough to adhere to the rolls and rollers with which it comes into engagement. In practice, the dough is unlikely to adhere to any significant extent to the rolls of the sheeter or to the reducing rolls, but care may be needed to effect clean removal of the dough from the embossed rollers. The incorporation of oil with the said dry particulate mixture during the formation of the dough may make it easier to do that, or lessen or avoid the need to use special techniques known to those in the art for removing dough from rollers, for example, using embossed rollers that are coated with Teflon (Trade Mark), heating one only of the two rollers and (when the embossed rollers are rollers corrugated in an axial direction) running the two embossed rollers at slightly different speeds.

One form of process in accordance with the invention will now be described, by way of example, with reference to the accompanying drawings, in which:
Fig. 1 is a diagrammatic side view of apparatus for carrying out the process; and
Fig. 2 is an axial cross-section, on a larger scale than Fig. 1, taken through a part of the apparatus shown in Fig. 1.

Referring to Fig. l of the accompanying drawings, a mixture of solid constituents suitable (with the addition of water) for the formation of a dough are mixed in a mixer, which is shown schematically at l, water is introduced into the mixer and mixing is continued to form a dough.

The dough formed in the mixer l is transported by a conveyor, which is shown schematically at 2, to a three roll sheeter, which is indicated generally by the reference numeral 3. The sheeter 3 does mechanical work on the dough and forms it into a flat sheet 4.

The flat sheet of dough 4 that emerges from the sheeter 3 is fed by a conveyor (not shown), to a first pair of reducing rolls indicated generally by the reference numeral 5. The reducing rolls 5 do mechanical work on the sheet of dough 4, reducing the thickness (and hence reducing the piece weight) of the sheet. From the first set of reducing rolls 5, the sheet of dough 4 is fed by a conveyor (not shown) to a second set of reducing rolls indicated generally by the reference numberal 6. The rolls 6 are arranged further to reduce the thickness of the sheet of dough 4 and, in doing that, they do mechanical work on the dough. The rolls 5 and 6 are so driven that the rolls 6 have a higher circumferential speed than that of the rolls 5 to take account of the increase in the speed of advance of the sheet of dough 4 that results from the decrease in the thickness of the sheet that is effected by the rolls 5.

From the second pair of reducing rolls 6, the sheet of dough is fed by a conveyor (not shown) to a pair of embossed rollers, which are indicated generally by the reference numeral 7. The term "embossed" is used throughout the specification, including the claims, to refer to the configuration of the curved surfaces of rollers, and not to the way in which the rollers are made. Thus, the term "embossed" is used herein to mean that the curved surface of an embossed roller bears a pattern, which is in relief. Because the pattern is in refief it imparts a corresponding 3-dimensional configuration to the sheet of dough.

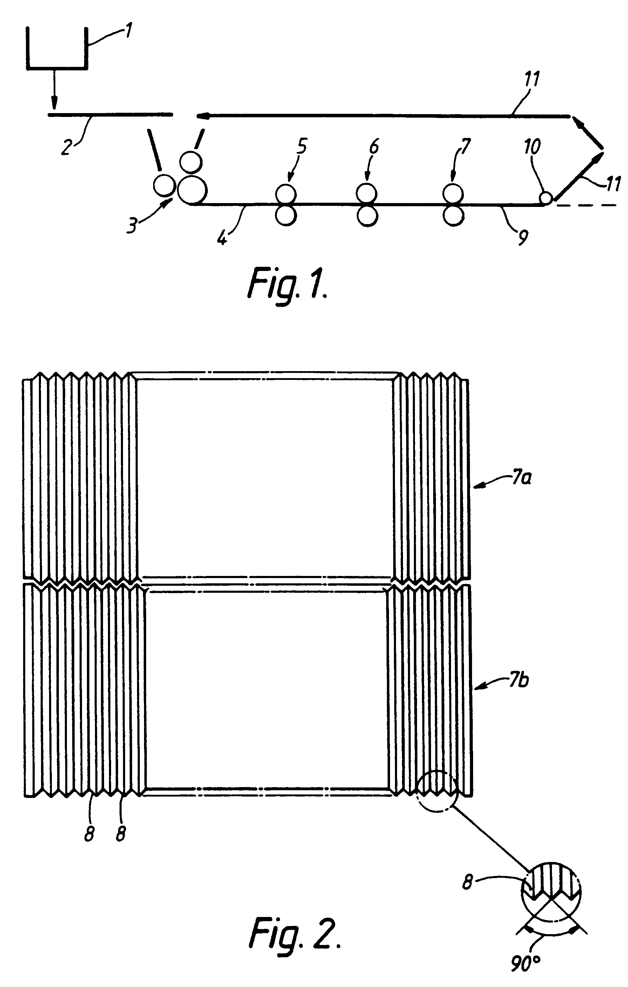

The embossed rollers 7 comprise an upper roller which is indicated generally by the reference numeral 7a and a lower roller which is indicated generally by the reference numeral 7b. Referring to the Fig. 2 the rollers 7a and 7b, which are identical, are corrugated in an axial direction that is to say, they are corrugated with the individual corrugations extending circumferentially.

The form of the corrugation on the rollers 7a and 7b is such that, as seen in axial section and shown in Fig. 2, the curved surfaces of each of the rollers has a toothed profile. Again with the roller 7a and 7b seen in axial section, the teeth 8 are bounded by straight lines which meet at an angle of 90° at the apices of the teeth. Similarly, the lines that bound the teeth meet at an angle of 90° at the bases of the gaps between adjacent teeth.

The rollers 7a and 7b are displaced axially relative to one another by half the pitch of the corrugations, that is to say, by half the separation between the apices of adjacent teeth 8. Thus, save for an end tooth of the teeth 8 on the roller 7a, the apices of each of the teeth on the rollers 7a lie mid way between the apices of the teeth of a pair of adjacent teeth on the roller 7b. Similarly, save for an end tooth of the teeth 8 on the roller 7b, the apices of each of the teeth on the rollers 7b lie mid way between the apices of the teeth of a pair of adjacent teeth on the roller 7a.

The embossed rollers 7 serve not only to impart a three-dimensional patterned configuration to the dough (here, a corrugated pattern with the individual corrugations extending in the direction of advance of the dough), but also to reduce materially the piece weight of the sheet of dough, which implies that the embossed rollers do a substantial amount of mechanical work on the dough.

The corrugated sheet of dough 9 that emerges from the embossed rollers 7 is fed to a cutter l0, which cuts out from the corrugated sheet individual portions of the shape and size desired for the final product. What remains of the corrugated sheet 9 after the portions have been removed by the cutter is recycled by a conveyor, shown schematically at ll, to the three roll sheeter 3. It will be appreciated that the dough that is recycled in that way has already had a considerable amount of mechanical work done on it, and it may be found that account may have to be taken of that, and of the proportion of dough that is recycled, when deciding how much mechanical work should be done on the dough at other stages of the process. The recycled dough will in general constitute only a relatively small proportion, say 10 to 15% or less, of the dough entering the sheeter so that the amount of mechanical work required will be only slightly different from what it would be if no dough were recycled.

The portions of dough that have been cut out of the corrugated sheet 9 by the cutter 10 are fed to a fryer. The frying serves to expel the water from the portions of dough and to form the final, snack product.

In a typical process, the flat sheet of dough 4 may leave the three roll sheeter at a speed of rather less than 2 feet per minute (say, about 0.5m per minute), and the corrugated sheet of dough 5 may leave the embossed rollers 7 at a speed of about 6 feet per minute (say, about 2m per minute). It will be appreciated that the speed of the conveyors on which the sheet of dough is transported between the sheeter and the first set of reducing rolls, between the first and second sets of reducing rolls and between the second set of reducing rolls and the embossed rollers, respectively, will be selected, taking into account the speed at which the sheet is delivered onto the respective conveyor by the sheeter or the rolls and the speed at which the sheet is subsequently taken up by the rolls or the embossed rollers as the case may be, such that the sheet of dough is under low tension, thereby reducing the risk of breakage of the sheet of dough.

As an example of suitable dimensions for the corrugations on the embossed rollers 7, the spacing between the apices of adjacent teeth of the rollers shown in Fig. 2 may be 4mm.

The following examples illustrate the invention:

### Example 1

The following dry ingredients, in the quantities indicated, were mixed for two minutes in a Hobart mixer, which was set at "Slow" speed, using a paddle mixer:

| | |
|---|---|
| Whole Potato Flake | 400g |
| Rice Starch | 20g |
| Salt | 20g |
| Glycerol monostearate | 10g |
| Paselli P (Modified Potato Starch) | 15g |
| Potato Starch | 150g |

After the dry ingredients had been mixed for two minutes, mixing was continued while 400ml water was added over a period of approximately ten seconds. The resulting dough was mixed for a further two minutes and then, without stopping the mixer, 10ml edible oil was added over a period of approximately two seconds. Thereafter, mixing was continued for a further two minutes. The dough so obtained had a crumbly texture but, when squeezed by hand, could be formed into a solid mass which, when released, did not disintegrate spontaneously.

The dough was transferred by hand to a three-roll sheet-former, which formed it into a sheet of dough having a piece weight of 27.0g. The sheet was transferred to a sheet processing apparatus, which included two pairs of reducing rollers through which the sheet passed in line and a pair of corrugated rollers through which the sheet passed after it had passed through the second pair of reducing rollers. The corrugated rollers were as described above with reference to Fig. 2 of the accompanying drawings, the spaces between the apices of adjacent teeth being 4mm. The first pair of reducing rollers was arranged to decrease the piece weight of the sheet to 22.0g, and the second pair of reducing rollers was arranged to reduce further the piece weight of the sheet. After it had passed through the second pair of reducing rollers, the sheet had a piece weight of 17.0g. The corrugated rollers were arranged to reduce the piece weight of the sheet from 17.0g to 4.0g. Individual portions were cut from the resulting corrugated sheet by hand and fried in oil at a temperature of 180°C for 40 seconds.

The corrugations were retained during frying and the strength of the final, fried product was such that, under conditions that were simulated to resemble those that would obtain during normal handling and transport of the kind to which such snack products are generally subjected, the amount of breakage of the products which occurred was within limits which would generally be regarded as acceptable for such products.

### Example 2

Individual products were made in accordance with the method of Example 1 except that the corrugated rollers were arranged to reduce the piece weight of the sheet to 3.5g. The corrugations were retained during frying, but the final, fried product was slightly more fragile than the product of Example 1.

### Example 3

Individual products were made in accordance with the method of Example 1 except that the corrugated rollers were arranged to reduce the piece weight of the sheet to 3.0g. The lower piece weight reduced the frying time necessary to cook the products, and the frying time was only slightly less than 40 seconds. The corrugations were retained during frying but the final, fried product was more fragile than the product of Example 1.

### Example 4

Individual products were made in accordance with the method of Example 1 except that the corrugated rollers were arranged to reduce the piece weight of the sheet to 2.5g and the frying time was slightly less than 40 seconds. The corrugations were retained on frying but the final, fried product was more fragile than the product of Example 1.

### Example 5

Individual products were made in accordance with the method of Example 1 except that the second pair of reducing rollers was arranged to reduce the piece weight of the sheet from 22.0g to 15.0g and the corrugated rollers were arranged to reduce the piece weight of the sheet from 15.0g to 4.0g. On frying, the corrugations were well retained, and the strength of the final, fried product was such that, under conditions that were simulated to resemble those that would obtain during normal handling and transport of the kind to which such snack products are generally subjected, the amount of breakage of the products which occurred was within limits which would generally be regarded as acceptable for such products.

### Example 6

Individual products were made in accordance with the method of Example 1 except that the second pair of reducing rollers was arranged to reduce the piece weight of the sheet from 22.0g to 12.0g and the corrugated rollers were arranged to reduce the piece weight of the sheet from 12.0g to 4.0g. On frying, the corrugations were well retained and the strength of the final, fried product was such that, under conditions that were simulated to resemble those that would obtain during normal handling and transport of the kind to which such snack products are generally subjected, the amount of breakage of the products which occurred was small and was within limits which would generally be regarded as acceptable for such products.

### Example 7

Individual products were made in accordance with the method of Example 1 except that the second pair of reducing rollers was arranged to reduce the piece weight of the sheet from 22.0g to 10.0g and the corrugated rollers were arranged to reduce the piece weight of the sheet from 10.0g to 4.0g. On frying, the corrugations were well retained and the strength of the final, fried product was such that, under conditions that were simulated to resemble those that would obtain during normal handling and transport of the kind to which such snack products are generally subjected, the amount of breakage of the products which occurred was within limits which would generally be regarded as acceptable for such products.

### Example 8

Individual products were made in accordance with the method of Example 1 except that the second pair of reducing rollers was arranged to reduce the piece weight of the sheet from 22.0g to 8.0g and the corrugated rollers were arranged to reduce the piece weight of the sheet from 8.0g to 4.0g. Although there was some retention of the corrugations on frying, the rippled or corrugated effect in the final, fried product was relatively weak as compared with the effect in the products of Examples 1 and 5 to 7.

### Example 9

Individual products were made in accordance with the method of Example 1 except that the second pair of reducing rollers was arranged to reduce the piece weight of the sheet from 22.0g to 6.0g and the corrugated rollers were arranged to reduce the piece weight of the sheet from 6.0g to 4.0g. Although there was some retention of the corrugations on frying, the rippled or corrugated effect in the final, fried product was relatively weak as compared with the effect in the products of Examples 1 and 5 to 7.

It was found to be possible to make an acceptable corrugated product when the ratio of piece weights before and after the corrugated rollers was only l.5:1. As will be apparent from Examples 1 to 9 above, however, individual products obtained from a process in which a relatively large reduction of the piece weight, that is to say, a reduction in the ratio of 2.5 to l or more, was effected by the corrugated rollers were preferred both because of the retention of corrugations during frying and because of improved resistance to breakage of the product (see Examples 1, 5, 6 and 7).

As a basis for comparison with the Examples according to the invention, individual products were made in accordance with the method of Example 1, except that the second pair of reducing rollers was arranged to reduce the piece weight of the sheet from 22.0g to 4.0g and the corrugated rollers were so arranged that when the sheet passed between the roller corrugations were imparted to the sheet without further reduction in the piece weight of the sheet. When the portions cut from the corrugated sheet were fried, they did not retain the corrugations, although residual score marks were observed in the final, fried product.

The formation of a sheet of piece weight less than 2.5g was found not to be practicable because removal of such a sheet from the corrugated rollers was difficult.

## Claims

1. A process for the manufacture of a snack food product which comprises forming a flat sheet of dough, passing the sheet of dough through at least one pair of reducing rolls arranged to decrease the piece weight of the sheet of dough (the term "piece weight" being defined as the weight of a piece of dough removed from the sheet by impressing on the sheet a circular cutter having an internal diameter of 75 mm, the cutter being so applied to the sheet that it does not extend beyond an edge of the sheet) and feeding the sheet of dough, after it has been acted on by the at least one pair of reducing rolls, to a pair of embossed rollers arranged both to decrease the piece weight of the sheet of dough to a value not exceeding two thirds of that obtaining immediately before the sheet of dough is acted on by the embossed rollers and to impart a three-dimensional patterned configuration to the sheet of dough, the piece weight of the patterned sheet of dough being not less than 2.5g, cutting out individual portions from the patterned sheet and frying the individual portions to form the snack food product.

2. A process as claimed in claim 1, wherein the embossed rollers are corrugated rollers.

3. A process as claimed in claim 2, wherein the corrugated rollers are corrugated in an axial direction.

4. A process as claimed in claim 2 or claim 3, wherein the rollers are corrugated by virtue of their having circumferentially extending ridges and/or grooves.

5. A process as claimed in claim 4, wherein the configuration of the ridges and/or grooves is such that, seen in axial section, the curved surface of each roller has a toothed profile.

6. A process as claimed in claim 5, wherein the curved surfaces of the two corrugated rollers have, when seen in axial section, the same configuration.

7. A process as claimed in claim 6, wherein the teeth that form the said profile are each symmetrical about a plane that extends perpendicular to the axis of the roller and passes through the apices of the tooth.

8. A process as claimed in claim 7, wherein the two corrugated rollers are so located relative to one another in an axial direction that the apices of the teeth (save possibly for one end tooth) that form the said profile of one corrugated roller lie in planes that are perpendicular to the axes of the two corrugated rollers and that are midway between planes parallel to those planes and passing through the apices of the teeth that form the said profile of the other corrugated roller.

9. A process as claimed in claim 7, wherein the two corrugated rollers are so located relative to one another in an axial direction that the apices of the teeth (save possibly for one end tooth) that form the said profile of one corrugated roller lie in planes that are perpendicular to the axes of the two corrugated rollers and that are between, but not midway between, planes parallel to those planes and passing through the the apices of the teeth that form the said profile of the other corrugated roller.

10. A process as claimed in claim 6, wherein the teeth that form the said profile are each asymmetrical about a plane that extends perpendicular to the axis of the roller and passes through the apex of the tooth.

11. A process as claimed in any one of claims 1 to 10, wherein the flat sheet of dough is formed, at least in part, by a three-roll sheet former.

12. A process as claimed in any one of claims 1 to 11, wherein the ratio of the said piece weight of the flat sheet of dough immediately before the sheet is acted on by the embossed rollers to the said piece weight of the patterned sheet of dough is at least 2.5 to 1 and preferably at least 4 to 1.

13. A process as claimed in any one of claims 1 to 12, wherein the ratio of the said piece weight of the flat sheet of dough immediately before the sheet is acted on by the embossed rollers to the said piece weight of the patterned sheet does not exceed 6 to 1.

14. A process as claimed in any one of claims 1 to 13, wherein the said piece weight of the patterned sheet of dough is at least 3.5g.

15. A process as claimed in any one of claims 1 to 14, wherein the said piece weight of the patterned sheet of dough does not exceed 6g.

16. A process as claimed in any one of claims 1 to 15, wherein the dough has been obtained by mixing at at least one starchy food product, water and one or more materials selected from the group comprising starches, modified starches, emulsifying agents, flavourings, edible oils.

17. A process as claimed in claim 16, wherein the starchy food product, or at least one of the starchy food products is a potato product, for example, potato flour, potato flakes or potato granules.

18. A process as claimed in claim 16 or claim 17, wherein one of the materials used in the formation of the dough is a starch, for example, a potato starch.

19. A process as claimed in any one of claims 16 to 18, wherein one of the materials used in the formation of the dough is a modified starch.

20. A process as claimed in any one of claims 16 to 19, wherein one of the materials used in the formation of the dough is an emulsifying agent, for example, glycerol monostearate.

## Patentansprüche

1. Ein Verfahren für die Herstellung eines Imbißprodukts, das das Bilden eines flachen Fladens aus Teig umfaßt, das Passierenlassen des Teigfladens durch mindestens ein Paar von Reduzierwalzen, die angeordnet sind zum Vermindern des Stückgewichts des Teigfladens (der Ausdruck "Stückgewicht" ist dabei definiert als das Gewicht eines Teigstückes, das dem Fladen entnommen wird durch Eindrücken eines runden Ausstechwerkzeugs mit einem Innendurchmesser von 75 mm in den Fladen, welches Ausstechwerkzeug so auf den Fladen einwirkt, daß es nicht über eine Kante des Fladens hinausragt), und das Zuführen des Teigfladens, nachdem er von dem mindestens einem Paar von Reduzierwalzen bearbeitet worden ist, zu einem Paar von bossierten Walzen, welche beide so angeordnet sind, daß das Stückgewicht des Teigfladens auf einen Wert verringert wird, der nicht zwei Drittel jenes übersteigt, der unmittelbar vor der Bearbeitung des Teigfladens durch die bossierten Walzen erhalten wird, und welche dem Teigfladen eine dreidimensional gemusterte Konfiguration verleihen, wobei das Stückgewicht des gemusterten Teigfladens nicht kleiner ist als 2,5 g, das Ausschneiden einzelner Portionen aus dem gemusterten Fladen und das Ausbacken der einzelnen Portionen zur Bildung des Imbißprodukts.

2. Ein Verfahren nach Anspruch 1, bei dem die bossierten Walzen gewellte Walzen sind.

3. Ein Verfahren nach Anspruch 2, bei dem die gewellten Walzen in Axialrichtung gewellt sind.

4. Ein Verfahren nach Anspruch 2 oder Anspruch 3, bei dem die Walzen gewellt sind infolge des Vorsehens von in Umfangsrichtung sich erstreckender Rippen und/oder Nuten.

5. Ein Verfahren nach Anspruch 4, bei dem die Konfiguration der Rippen und/oder Nuten derart ist, daß, in Axialrichtung gesehen, die gekrümmte Oberfläche jeder Walze ein verzahntes Profil aufweist.

6. Ein Verfahren nach Anspruch 5, bei dem die gekrümmten Oberflächen der beiden gewellten Walzen, in Axialrichtung gesehen, dieselbe Konfiguration haben.

7. Ein Verfahren nach Anspruch 6, bei dem die Zähne, welche das Profil bilden, jeweils symmetrisch sind um eine Ebene, die sich senkrecht zur Achse der Walze erstreckt und durch die Spitzen der Zähne verläuft.

8. Ein Verfahren nach Anspruch 7, bei dem die beiden gewellten Walzen so relativ zueinander in einer Axialrichtung angeordnet sind, daß die Spitzen der Zähne (mit Ausnahme eines endständigen Zahns), welche das Profil einer der gewellten Walzen bildet, in Ebenen liegen, die senkrecht zur Achse der beiden gewellten Walzen verlaufen und sich in der Mitte befinden zwischen Ebenen parallel zu jenen Ebenen, und durch die Spitzen der Zähne verlaufen, welche das Profil der anderen gewellten Walze bilden.

9. Ein Verfahren nach Anspruch 7, bei dem die beiden gewellten Walzen so relativ zueinander in Axialrichtung angeordnet sind, daß die Spitzen der Zähne (mit Ausnahme möglicherweise für einen endständigen Zahn), welche das Profil einer gewellten Walze bilden, in Ebenen liegen, die senkrecht zu den Achsen der beiden gewellten Walzen verlaufen, und die zwischen, jedoch nicht in der Mitte, Ebenen parallel zu jenen Ebenen liegen, welche durch die Spitzen der Zähne verlaufen, die das Profil der anderen gewellten Walze bilden.

10. Ein Verfahren nach Anspruch 6, bei dem die Zähne, welche das Profil bilden, jeweils asymmetrisch bezüglich einer Ebene sind, die sich senkrecht zu der Achse der Walze erstreckt und durch die Spitze der Zähne verläuft.

11. Ein Verfahren nach einem der Ansprüche 1 bis 10, bei dem der flache Teigfladen mindestens teilweise mittels eines Dreiwalzen-Fladenformers gebildet wird.

12. Ein Verfahren nach einem der Ansprüche 1 bis 11, bei dem das Verhältnis des Stückgewichts des flachen Teigfladens, unmittelbar bevor der Fladen mit den bossierten Walzen bearbeitet wird, zu dem Stückgewicht des bemusterten Teigfladens mindestens 2,5 zu 1 beträgt und vorzugsweise mindestens 4 zu 1.

13. Ein Verfahren nach einem der Ansprüche 1 bis 12, bei dem das Verhältnis des Stückgewichts des Teigfladens, unmittelbar bevor der Fladen von den bossierten Walzen bearbeitet wird, zu dem Stückgewicht des bemusterten Fladens nicht 6 zu 1 übersteigt.

14. Ein Verfahren nach einem der Ansprüche 1 bis 13, bei dem das Stückgewicht des bemusterten Teigfladens mindestens 3,5 g beträgt.

15. Ein Verfahren nach einem der Ansprüche 1 bis 14, bei dem das Stückgewicht des bemusterten Teigfladens 6 g nicht übersteigt.

16. Ein Verfahren nach einem der Ansprüche 1 bis 15, bei dem der Teig erhalten wird durch Mischen von mindestens einem Stärke enthaltenden Nahrungsprodukt, Wasser und einem oder mehr Materialien, ausgewählt aus der Gruppe, die Stärken, modifizierte Stärken, Emulgatoren, Geschmacksstoffe und eßbare Fette umfaßt.

17. Ein Verfahren nach Anspruch 16, bei dem das stärkehaltige Nahrungsmittel oder mindestens eines der stärkehaltigen Nahrungsmittel ein Kartoffelprodukt ist, beispielsweise Kartoffelmehl, Kartoffelflocken oder Kartoffelgranulat.

18. Ein Verfahren nach Anspruch 16 oder Anspruch 17, bei dem eines der Materialien, verwendet bei der Zubereitung des Teiges, eine Stärke ist, beispielsweise eine Kartoffelstärke.

19. Ein Verfahren nach einem der Ansprüche 16 bis 18, bei dem eines der Materialien, verwendet bei der Herstellung des Teiges, eine modifizierte Stärke ist.

20. Ein Verfahren nach einem der Ansprüche 16 bis 19, bei dem eines der Materialien, verwendet bei der Herstellung des Teiges, ein Emulgator ist, beispielsweise Glycerolmonostearat.

## Revendications

1. Procédé pour la fabrication d'un produit alimentaire pour repas léger qui comprend les étapes consistant à former une feuille plate de pâte, à faire passer la feuille de pâte à travers au moins une paire de rouleaux réducteurs agencés pour diminuer le poids à la pièce de la feuille de pâte (le terme "poids à la pièce" étant défini comme le poids d'une pièce de pâte enlevée de la feuille en appliquant sur la feuille un outil coupant circulaire ayant un diamètre intérieur de 75 mm, l'outil coupant étant appliqué sur la feuille de telle manière qu'il ne dépasse pas au-delà d'un bord de la feuille) et à amener la feuille de pâte, après que la au moins une paire de rouleaux réducteurs ait agi sur celle-ci, à une paire de rouleaux à bosselures agencés pour à la fois diminuer le poids à la pièce de la feuille de pâte à une valeur ne dépassant pas les deux tiers de celle obtenue juste avant que les rouleaux à bosselures n'agissent sur la feuille de pâte et pour communiquer une configuration à motifs tridimensionnels à la feuille de pâte, le poids à la pièce de la feuille de pâte à motifs étant inférieur à 2,5 g, à découper des parties individuelles à partir de la feuille à motifs et à faire frire les parties individuelles afin de former le produit alimentaire pour repas léger.

2. Procédé selon la revendication 1, dans lequel les rouleaux à bosselures sont des rouleaux ondulés.

3. Procédé selon la revendication 2, dans lequel les rouleaux ondulés sont ondulés dans une direction axiale.

4. Procédé selon la revendication 2 ou la revendication 3, dans lequel les rouleaux sont ondulés en vertu du fait qu'ils comportent des nervures et/ou rainures s'étendant suivant la circonférence.

5. Procédé selon la revendication 4, dans lequel la configuration des nervures et/ou rainures est telle que, vue en coupe axiale, la surface incurvée de chaque rouleau comporte un profil en dents de scie.

6. Procédé selon la revendication 5, dans lequel les surfaces incurvées des deux rouleaux ondulés ont, vues en coupe axiale, la même configuration.

7. Procédé selon la revendication 6, dans lequel les dents qui forment ledit profil sont chacune symétriques autour d'un plan qui s'étend perpendiculaire à l'axe du rouleau et passe par les sommets des dents.

8. Procédé selon la revendication 7, dans lequel les deux rouleaux ondulés sont placés l'un par rapport à l'autre dans une direction axiale de sorte que les sommets des dents (à l'exception éventuellement d'une dent d'extrémité) qui forment ledit profil d'un premier rouleau ondulé se trouvent dans des plans qui sont perpendiculaires aux axes des deux rouleaux ondulés et qui sont à mi-chemin entre des plans parallèles à ces plans et passant par les sommets des dents qui forment ledit profil de l'autre rouleau ondulé.

9. Procédé selon la revendication 7, dans lequel les deux rouleaux ondulés sont placés l'un par rapport à l'autre dans une direction axiale de sorte que les sommets des dents (à l'exception éventuellement d'une dent d'extrémité) qui forment ledit profil d'un premier rouleau ondulé se trouvent dans des plans qui sont perpendiculaires aux axes des deux rouleaux ondulés et qui sont entre, mais non à mi-chemin entre, des plans parallèles à ces plans et passant par les sommets des dents qui forment ledit profil de l'autre rouleau ondulé.

10. Procédé selon la revendication 6, dans lequel les dents qui forment ledit profil sont chacune asymétrique autour d'un plan qui s'étend perpendiculaire à l'axe du rouleau et passe par le sommet de la dent.

11. Procédé selon l'une quelconque des revendications 1 à 10, dans lequel la feuille plate de pâte est formée, en partie au moins, par un dispositif de formation de feuille à trois rouleaux.

12. Procédé selon l'une quelconque des revendications 1 à 11, dans lequel le rapport dudit poids à la pièce de la feuille plate de pâte, juste avant que les rouleaux bosselés n'agissent sur la feuille, audit poids à la pièce de la feuille de pâte à motifs est d'au moins 2,5 à 1 et, d'une manière préférée, d'au moins 4 à 1.

13. Procédé selon l'une quelconque des revendications 1 à 12, dans lequel le rapport dudit poids à la pièce de la feuille plate de pâte, juste avant que les rouleaux à bosselures n'agissent sur la feuille, audit poids à la pièce de la feuille de pâte à motifs ne dépasse pas 6 à 1.

14. Procédé selon l'une quelconque des revendications 1 à 13, dans lequel ledit poids à la pièce de la feuille de pâte à motifs est d'au moins 3,5 g.

15. Procédé selon l'une quelconque des revendications 1 à 14, dans lequel ledit poids à la pièce de la feuille de pâte à motifs ne dépasse pas 6 g.

16. Procédé selon l'une quelconque des revendications 1 à 15, dans lequel la pâte a été obtenue en mélangeant au moins un produit alimentaire féculent, de l'eau et un ou plusieurs matériaux choisis parmi les groupes comprenant des amidons, des amidons modifiés, des agents émulsifiants, des agents de saveur, des huiles comestibles.

17. Procédé selon la revendication 16, dans lequel le produit alimentaire féculent, ou au moins l'un des produits alimentaires féculents est un produit de pomme de terre, par exemple, de la farine de pomme de terre, des flocons de pomme de terre ou des granulés de pomme de terre.

18. Procédé selon la revendication 16 ou la revendication 17, dans lequel l'un des matériaux utilisé dans la formation de la pâte est un amidon, par exemple, un amidon de pomme de terre.

19. Procédé selon l'une quelconque des revendications 16 à 18, dans lequel l'un des matériaux utilisé dans la formation de la pâte est un amidon modifié.

20. Procédé selon l'une quelconque des revendications 16 à 19, dans lequel l'un des matériaux utilisé dans la formation de la pâte est un agent émulsifiant, par exemple des monostéarates de glycérol.
